# EUROPÄISCHE PATENTANMELDUNG

(11) **EP 3 556 787 A1**
(43) Veröffentlichungstag der Anmeldung: **23.10.2019**
(21) Anmeldenummer: 18168138.8
(22) Anmeldetag: 19.04.2018
(51) Int. Cl.: C08G 18/48, C08G 18/76, C08G 18/79, C08G 18/10, C08G 18/16, C08G 18/18, C08G 18/20, C08G 18/24, C08G 18/42, C08G 18/30, C08G 101/00

(54) **HOCHELASTISCHES SCHUHSOHLENMATERIAL UND DESSEN VERWENDUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft hochelastische Schuhsohlenmaterialien auf Basis Polyurethan sowie deren Verwendung zur Herstellung von Schuhzwischensohlen.

## Beschreibung

Die vorliegende Erfindung betrifft hochelastische Schuhsohlenmaterialien auf Basis Polyurethan sowie deren Verwendung zur Herstellung von Schuhzwischensohlen.

Schuhsohlen auf Basis von Polyurethan sind bekannt und vielfältig beschrieben. Neben traditionellen Schuhsohlen, die dem Fuß möglichst viel Halt bieten, sollte das Sohlenmaterial in der Vergangenheit gute Dämpfungseigenschaften aufweisen, damit ein guter Komfort beim Laufen entsteht. Seit einiger Zeit zeigt sich der Trend nach Sohlenmaterialien, die die Laufenergie nicht speichern, sondern direkt abgeben und dem Fuß gleichzeitig möglichst viel Halt geben. Um diese Eigenschaften zu erreichen, sollte eine Schuhsohle eine Rückprallelastizität von über 50% und typischerweise eine Shore-A-Härte von über 38 aufweisen. Bei der maschinellen Herstellung von Schuhen mit solchen Materialien sind die üblichen Entformzeiten von unter 10 Minuten, vorzugsweise unter 4 Minuten einzuhalten.

Das Erreichen von hoher Rückprallelastizität ist durch Verwendung von PTHF-basierten Polyolen (wie in EP 2275465 A2 beschrieben) möglich. Allerdings werden hier nur Shore A Härten von bis zu 27 erreicht. Eine Möglichkeit zur Erhöhung der Härte wäre die Verwendung von Kettenverlängerungsmitteln, was aber zu einem deutlichen Abfall der Rückprallelastizität führt. Eine andere Möglichkeit zur Erhöhung der Härte wäre die Verschiebung des Mischungsverhältnisses zu Gunsten des Isocyanatanteils. Dieses führt allerdings zu einer verzögerten Durchhärtung der Reaktionsmischung und damit verbunden zu einer deutlichen Verlängerung der Entformzeit.

Aufgabe der vorliegenden Erfindung war es daher, ein ein Schuhsohlenmaterial zur Verfügung zu stellen, welches eine Rückprallelastizität von mindestens 50% und eine Shore-A-Härte von über38 unter Beibehaltung einer Entformzeit von unter 10 Minuten, vorzugsweise von unter 4 Minuten aufweist.

Diese Aufgabe konnte überraschenderweise durch ein Schuhsohlenmaterial auf Polyurethanbasis gelöst werden.

Gegenstand der Erfindung ist ein Schuhsohlenmaterial mit einer Shore-A-Härte von > 38 bis 50, bevorzugt >40 bis 45 gemäß DIN 53505 und einer Dichte von 200 bis 600 kg/m³, insbesondere von 250 bis 450 kg/m³ gemäß DIN EN ISO 845 und einer Rückprallelastizität von mindestens 50%, insbesondere mindestens 55% gemäß DIN 53512 aus Polyurethanschaumstoffen erhältlich aus der Reaktion der Komponenten bestehend aus
einer Isocyanatkomponente A bestehend aus
a) NCO-Prepolymeren mit einem NCO-Gehalt von 15 bis 25 Gew.-% auf Basis 4,4'-Diphenylmethandiisocyanat (MDI) und gegebenenfalls carbodiimidmodifiziertem 4,4'-MDI und linearen Polyesterpolyolen mit zahlenmittleren Molekulargewichten von 500-4000 g/mol und zahlenmittleren Funktionalitäten von 1,8 bis 2,5
   und einer Komponente B bestehend aus
b) Verbindungen mit mindestens zwei reaktiven Wasserstoffatomen, enthaltend mindestens 80 Gew.-%, bevorzugt mindestens 90 Gew.-% Polytetrahydrofuran (PTHF) mit einem zahlenmittleren Molekulargewicht von 500 bis 4000g/mol, insbesondere 800 bis 3000 g/mol und gegebenenfalls bis zu 20 Gew.-%, bevorzugt bis zu 10 Gew.-% Polyetherpolyolen ausgenommen PTHF mit zahlenmittleren Molekulargewichten von 600 bis 4000 g/mol und zahlenmittleren Funktionalitäten von 1,8 bis 2,5,
c) gegebenenfalls Kettenverlängerungsmitteln und/oder Vernetzungsmitteln,
   in einem Verhältnis der NCO-Gruppen der Komponenten a) zu den reaktiven Wasserstoffatomen der Komponenten b) und gegebenenfalls c) von 1: 0, 80 bis 1:1,15, bevorzugt von 1: 0,9 bis 1:1,1 in Gegenwart von
d) Treibmitteln,
e) einer Katalysatorkombination bestehend aus 1,4-Diazabicyclo-octan und mindestens einem Katalysator aus der Gruppe bestehend aus organischen Metallverbindungen und mindestens einem Katalysator aus der Gruppe bestehend aus Bis(2-Dimethylaminoethyl)ether und 1-Methylimidazol,
f) gegebenenfalls Hilfsmitteln und/oder Zusatzmitteln.

Bei den organischen Metallverbindungen handelt es sich vorzugsweise um organische Zinnverbindungen, wie Zinn(II)salze von organischen Carbonsäuren, z.B. Zinn(II)acetat, Zinn(II)octoat, Zinn(II)ethylhexoat und Zinn(II)laurat und Dialkylzinn(IV)salze von organischen Carbonsäuren, z.B. Dibutylzinndiacetat, Dibutylzinndilaurat, Dibutylzinnmaleat und Dioctylzinndiacetat und Dialkylzinnbis(alkylmercaptid) sowie Bismut(III)carboxylate, wie Bismut(III)neodecanoat, Bismut-2-ethylhexanoat und Bismutoctanoat.

Ein weiterer Gegenstand der Erfindung ist ein Verfahren zur Herstellung des erfindungsgemäßen Schuhsohlenmaterials, wobei die Komponente (A) und (B) zu einer Reaktionsmischung vermischt, die Mischung in eine geschlossene Form gegeben wird und zum Polyurethanschaumstoff ausreagiert.

Die erfindungsgemäßen Schuhsohlenmaterialien werden vorzugsweise zur Herstellung von Schuhzwischensohlen verwendet.

Die erfindungsgemäßen Schuhsohlenmaterialien weisen mit Werten von mindestens 50%, insbesondere mindestens 55% sehr hohe Rückprallelastizitäten (gemessen nach DIN 53512) und eine Weiterreißfestigkeit von vorzugsweise größer 3,0 N/mm, besonders bevorzugt von größer 5,0 N/mm nach DIN ISO 34-1 auf.

Die Dichte der erfindungsgemäßen Schuhsohlenmaterialien liegt bei 200 bis 600 kg/m³, vorzugsweise bei 250 bis 450 kg/m³. Damit sind die erfindungsgemäßen Materialien ausgezeichnet geeignet für den Einsatz als Schuhzwischensohlen.

Die erfindungsgemäßen Schuhsohlenmaterialien werden hergestellt, indem man die Isocyanatkomponente (A) mit der Polyolkomponente (B) zu einer Reaktionsmischung vermischt, in eine Form gibt und zu einem Polyurethanschaumstoff ausreagieren lässt.

Vorzugsweise werden zur Herstellung der erfindungsgemäß eingesetzten NCO-Prepolymere (a) 4,4'-Diphenylmethandiisocyanat (4,4'-MDI), gegebenenfalls zusammen mit carbodiimidmodifiziertem 4,4'-MDI und Polyesterpolyolen mit einem Molekulargewicht zwischen 500-4000 g/mol eingesetzt.

Die Verbindungen mit mindestens zwei gegenüber Isocyanatgruppen reaktiven Wasserstoffatomen (b) können beispielsweise höhermolekulare Polyetherpolyole mit zahlenmittleren Molekulargewichten von 600 bis 4000 g/mol enthalten. Zudem enthalten sie mindestens 80 Gew.-%, bevorzugt mindestens 85 Gew.-%, besonders bevorzugt mindestens 90 Gew.-% und insbesondere ausschließlich Polytetrahydrofuran mit einem Molekulargewicht von 500 bis 4000 g/mol, vorzugsweise von 800 bis 3000 g/mol und besonders bevorzugt von 1000 bis 3000 g/mol.

Als Kettenverlängerungsmittel und/oder Vernetzungsmittel (c) werden Substanzen mit einem Molekulargewicht von vorzugsweise kleiner 500 g/mol, besonders bevorzugt von 60 bis 400 g/mol eingesetzt, wobei Kettenverlängerer zwei gegenüber Isocyanaten reaktive Wasserstoffatome und Vernetzungsmittel drei oder mehr gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400 g/mol, besonders bevorzugt von 60 bis 300 g/mol und insbesondere 60 bis 150 g/mol eingesetzt. In Betracht kommen beispielsweise aliphatische, cycloaliphatische und/oder araliphatische Diole mil 2 bis 14, vorzugsweise 2 bis 1O Kohlenstoffatomen, wie Ethylenglykol, 1,3-Propandiol, 1,10-Decandiol, 1,2-, 1,3- und 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4- und 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden keine Vernetzungsmittel eingesetzt. Ganz besonders bevorzugt werden als Kettenverlängerer (c) Monoethylenglycol, 1,4-Butandiol, Glycerin oder Mischungen davon und insbesondere Monoethylenglycol oder Mischungen, enthaltend Monoethylenglycol, eingesetzt. Sofern Kettenverlängerungsmittel, Vernetzungsmittel oder Mischungen davon Anwendung finden, kommen diese zweckmäßigerweise in Mengen von 0 bis 10 Gew.-%, vorzugsweise 0 bis 7,5 Gew.-% zum Einsatz. Insbesondere wird kein Kettenverlängerer und kein Vernetzer zugesetzt.

Ferner sind bei der Herstellung von Polyurethanschaumstoffen Treibmittel (d) zugegen. Diese Treibmittel d) können Wasser sein oder Wasser enthalten. Als Treibmittel (d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um CO2, Kohlenwasserstoffe, halogenierte Kohlenwasserstoffe und andere Verbindungen, wie zum Beispiel perfluorierte Alkane, wie Perfluorhexan, Fluorchlorkohlenwasserstoffe und Ether, Ester, Ketone, Acetale oder Mischungen daraus, beispielsweise (cyclo)aliphatische Kohlenwasserstoffe mit 4 bis 8 Kohlenstoffatomen oder Fluorkohlenwasserstoffe. In einer bevorzugten Ausführungsform wird als Treibmittel eine Mischung enthaltend mindestens eines dieser Treibmittel und Wasser eingesetzt. Wasser als alleiniges Treibmittel ist besonders bevorzugt. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0, 1 bis 2 Gew.-%, bevorzugt 0,2 bis 1,7 Gew.-%, besonders bevorzugt 0,3 bis 1,4 Gew.-%, bezogen auf das Gesamtgewicht der Komponenten (b) bis (f). Besonders bevorzugt werden Treibmittel (d) in solchen Mengen eingesetzt, dass die freigeschäumte Dichte, die erhalten wird, wenn die Komponenten (a) bis (f) bei Normaldruck ohne räumliche Begrenzung miteinander umgesetzt werden, zwischen 80 und 300 kg/m³ liegt.

Als Katalysatoren (e) zur Herstellung der Polyurethanschaumstoffe wird eine Katalysatorkombination bestehend aus 1,4-Diazabicyclo-octan und mindestens einem Katalysator aus der Gruppe bestehend aus organischen Metallverbindungen, vorzugsweise organischen Zinnverbindungen, wie Zinn(II)salzen von organischen Carbonsäuren, z.B. Zinn(II)acetat, Zinn(II)octoat, Zinn(II)ethylhexoat und Zinn(II)laurat und Dialkylzinn(IV)salzen von organischen Carbonsäuren, z.B. Dibutylzinndiacetat, Dibutylzinndilaurat, Dibutylzinnmaleat und Dioctylzinndiacetat, Dialkylzinnbis(alkylmercaptid) sowie Bismutcarboxylaten, wie Bismut(III)-neodecanoat, Bismut-2-ethylhexanoat und Bismutoctanoat, und mindestens einem Katalysator aus der Gruppe bestehend aus Bis(2-Dimethylaminoethyl)ether und 1-Methylimidazol verwendet.

Vorzugsweise werden 0,01 bis 5 Gew.-%, insbesondere 0,05 bis 2 Gew.-% der Katalysatorkombination (e), bezogen auf das Gewicht der Komponenten (b) bis (f), eingesetzt.

Der Reaktionsmischung zur Herstellung der Polyurethanschäume können gegebenenfalls auch noch Hilfsmittel und/oder Zusatzmittel (f) zugegeben werden. Genannt seien beispielsweise oberflächenaktive Substanzen, Schaumstabilisatoren, Farbstoffe, Pigmente, Hydrolyseschutzmittel und Weichmacher.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, sowie Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als Weichmacher und Hydrolyseschutzmittel können beispielsweise y-Butyrolycton, Phthalate, organische Diester oder organische Carbonate eingesetzt werden.

Die Komponenten (a) bis (f) werden zur Herstellung eines erfindungsgemäßen Polyurethanschaumstoffs in solchen Mengen miteinander vermischt, dass das Äquivalenzverhältnis von NCO-Gruppen der Polyisocyanatkomponente (A) zur Summe der reaktiven Wasserstoffatome der Komponente (B) von 1: 0,80 bis 1:1,15, bevorzugt von 1: 0,9 bis 1:1,1 beträgt.

Die erfindungsgemäßen Polyurethanschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben im "Kunststoffhandbuch", Band 7, Polyurethane, 3. Auflage, 1993, Kapitel 7. Gegebenenfalls können die Formen bereits weitere Teile der Schuhsohle enthalten, wie beispielsweise die Laufsohle.

Die Ausgangskomponenten (a) bis (f) werden dazu vorzugsweise bei einer Temperatur von 15 bis 90°C, besonders bevorzugt von 25 bis 55°C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Schaumstoffen eine Dichte von 200 bis 600 kg/m³, vorzugsweise 250 bis 450 kg/m³, besonders bevorzugt von 300 bis 400 kg/m³ aufweisen.

Die Entformzeit ist erreicht, sobald der Polyurethanschaumstoff keine Hautablösung, keinen klebrigen Austrieb, keine Risse oder andere Oberflächendefekte aufweist.

Im Folgenden soll die Erfindung anhand von Beispielen näher erläutert werden.

### Beispiele:

### Ausgangsmaterialien:

PTHF 2000: Polytetrahydrofuran mit einem zahlenmittleren Molekulargewicht von 2000 g/mol
Dabco EG: 33% 1,4-Diazabicyclo-octan in 67% Monoethylenglykol
Tegostab B 8734 LF 2: Zubereitung von organomodifizierten Polysiloxanverbindungen
Dabco T 120: Dibutylzinnbis(dodecylmercaptid)
Niax Catalyst A-1: 70% Bis(2-Dimethylaminoethyl)ether (BDMAEE) in 30% Dipropylenglykol
Isocyanatkomponente: Prepolymer auf Basis 55,95 Gew.-% 4,4'- Diphenylmethandiisocyanat, 5,99 Gew.-% carbodiimidmodifiziertem 4,4'- Diphenylmethandiisocyanat und 36,65 Gew.-% Polyadipat auf Basis von Monoethylenglykol und Diethylenglykol (OH-Zahl: 55 mgKOH/g)
Gemäß den in Tabelle 1 angegebenen Zusammensetzungen wurden Polyurethanschaumstoffe mit einer Formteildichte von 360 kg/m³ bei Temperaturen von 35 °C hergestellt. Dazu wurden jeweils die A-Komponente und die B-Komponente im angegebenen Mischungsverhältnis vermischt und in eine Form gegeben.

**Tabelle 1: Zusammensetzungen**

| | Beispiel 1 (Vergleich) | Beispiel 2 (Vergleich) | Beispiel 3 (Erfindung) |
|---|---|---|---|
| **B**-**Komponente:** | | | |
| Dabco EG [Gew.-%] | 2,519 | 2,519 | 2,514 |
| | | | |
| PTHF 2000 [Gew.-%] | 96,121 | 96,121 | 95,927 |
| | | | |
| Tegostab B 8734 LF2 [Gew.-%] | 0,484 | 0,484 | 0,483 |
| Dabco T120 [Gew.-%] | 0,020 | 0,020 | 0,020 |
| Niax Catalyst A-1 [Gew.-%] | | | 0,201 |
| Wasser [Gew.-%] | 0,856 | 0,856 | 0,855 |
| | | | |
| | | | |
| **A-Komponente** [Gew.-%] | 52 | 58 | 58 |
| | | | |
| Äquivalenzverhältnis A:B | 1:0,91 | 1:1 | 1:1 |

**Tabelle 2: Physikalische Eigenschaften:**

| | Beispiel 1 (Vergleich) | Beispiel 2 (Vergleich) | Beispiel 3 (Erfindung) |
|---|---|---|---|
| Formteildichte in [kg/m³] (DIN EN ISO 845) | 360 | 360 | 360 |
| Härte in Shore A (DIN 53505) | 24 | 36 | 41 |
| Weiterreißfestigkeit in [kN/m] (DIN ISO 34-1) | 5,29 | 5,15 | 6,45 |
| Rückprallelastizität in [%] (DIN 53512) | 46,7 | 55,1 | 58,6 |
| Abriebwiderstand Volumenverlust in [mm³] (DIN ISO 4649) | 228 | 372 | 333 |
| Abriebwiderstand Masseverlust in [mg] (DIN ISO 4649) | 82 | 134 | 120 |
| Entformzeit in [Min.] | 3,5 | 40 | 3,5 |

Wie der Tabelle 2 zu entnehmen ist, weist der erfindungsgemäße Polyurethanschaumstoff bei gleicher Dichte eine hohe Rückprallelastizität von >50%, eine Entformzeit von 3,5 Minuten und eine Shore-A-Härte von > 40 auf.

## Patentansprüche

1. Schuhsohlenmaterialien mit einer Shore-A-Härte von >38 bis 50 gemäß DIN 53505 und einer Dichte von 200 bis 600 kg/m³ gemäß DIN EN ISO 845 und einer Rückprallelastizität von mindestens 50% gemäß DIN 53512 aus Polyurethanschaumstoffen erhältlich aus der Reaktion der Komponenten bestehend aus einer Isocyanatkomponente A bestehend aus
a) NCO-Prepolymeren mit einem NCO-Gehalt von 15 bis 25 Gew.-% auf Basis 4,4'-Diphenylmethandiisocyanat (MDI) und gegebenenfalls carbodiimidmodifiziertem 4,4'-MDI und linearen Polyesterpolyolen mit zahlenmittleren Molekulargewichten von 500 bis 4000 g/mol und zahlenmittleren Funktionalitäten von 1,8 bis 2,5 und einer Komponente B bestehend aus
b) Verbindungen mit mindestens zwei reaktiven Wasserstoffatomen, enthaltend mindestens 80 Gew.-% Polytetrahydrofuran (PTHF) mit einem zahlenmittleren Molekulargewicht von 500 bis 4000 g/mol und bis zu 20 Gew.-% Polyetherpolyolen ausgenommen PTHF mit zahlenmittleren Molekulargewichten von 600 bis 4000 g/mol und zahlenmittleren Funktionalitäten von 1,8 bis 2,5,
c) gegebenenfalls Kettenverlängerungsmitteln und/oder Vernetzungsmitteln,
in einem Verhältnis der NCO-Gruppen der Komponenten a) zu den reaktiven Wasserstoffatomen der Komponenten b) und gegebenenfalls c) von 1:0,80 bis 1:1,15 in Gegenwart von
d) Treibmitteln,
e) einer Katalysatorkombination bestehend aus 1,4-Diazabicyclo-octan und mindestens einem Katalysator aus der Gruppe bestehend aus organischen Metallverbindungen und mindestens einem Katalysator aus der Gruppe bestehend aus Bis(2-Dimethylaminoethyl)ether und 1-Methylimidazol,
f) gegebenenfalls Hilfs- und/oder Zusatzmitteln.

2. Verfahren zur Herstellung des Schuhsohlenmaterials gemäß Anspruch 1, wobei die Komponente (A) und (B) zu einer Reaktionsmischung vermischt, die Mischung in eine geschlossene Form gegeben wird und zum Polyurethanschaumstoff ausreagiert

3. Verwendung der Schuhsohlenmaterialien gemäß Anspruch 1 zur Herstellung von Schuhzwischensohlen.
